# EUROPEAN PATENT APPLICATION

(11) **EP 2 747 480 A1**
(43) Date of publication of application: **25.06.2014**
(21) Application number: 12306666.4
(22) Date of filing: 21.12.2012
(51) Int. Cl.: H04W 36/00, H04W 12/06, H04W 36/14

(54) **Method for accessing a second data communication network and corresponding device and system**

(71) Applicant: Gemalto SA, 92190 Meudon (FR)
(72) Inventor: Baudouin, Julien, 13705 La Ciotat (FR); Chene, Gilles, 13705 La Ciotat (FR)

(57) **Abstract**

The invention relates to a method for accessing a second data communication network 120.

According to the invention, a first data communication network 100 includes a network detection entity 110. The method comprises the following steps. The network detection entity detects a device 14 under a radio coverage of the first data communication network. The network detection entity sends to a first remote server 112 information 26 and at least one identifier relating to a device. The first remote server is included within the first data communication network. The first remote server retrieves an identifier relating to an access point 114 that is associated with the information. The access point is included within a second data communication network. The first remote server sends to the device at least one first message 28 comprising the identifier relating to an access point. And the device sends to the access point a request 220 for launching an authentication procedure.

The invention also pertains to corresponding device and system.

## Description

### Field of the invention:

The invention relates, in a general manner, to a method for accessing a second data communication network.

Furthermore, the invention also pertains to a device for accessing a second data communication network.

Finally, the invention relates to a system for accessing a second data communication network.

### State of the art:

WO 2012/099541 A1 discloses a solution for switching from a mobile radio network, as first data communication network, to a Short Range (or SR) radio network, as second data communication network, so as to communicate data between a mobile device and a wireless Access Point (or AP).

Such a switching solution allows offloading the first data communication network and using the second data communication network.

However, such a known solution is based upon a lot of messages that are exchanged between the mobile device and the wireless AP, so as to switch from the first to the second data communication network. More exactly, the mobile device sends to the wireless AP two authentication requests each via one of the two data communication networks. The wireless AP sends back to the mobile device, only via the second data communication network, an authentication response relating to one or two authentication requests.

Thus, there is a need to access from a mobile device to a wireless AP notably in a more efficient manner with respect to the known solution while switching from a first to a second communication network.

### Summary of the invention:

The invention proposes a solution for satisfying the just hereinabove specified need by providing a method for accessing a second data communication network.

According to the invention, a first data communication network includes a network detection entity. The method comprises the following steps. The network detection entity detects a device under a radio coverage of the first data communication network. The network detection entity sends to a first remote server information and at least one identifier relating to a device. The first remote server is included within the first data communication network. The network detection entity or the first remote server retrieves an identifier relating to an access point that is associated with the information. The access point is included within a second data communication network. The first remote server sends to the device at least one first message comprising the identifier relating to an access point. And the device sends to the access point a request for launching an authentication procedure.

The principle of the invention consists in that, further to an attachment of an identified device to a first (data communication) network and a transmission of data from a network detection entity to a first (remote) server of the first network, the first server finds, thanks to the data, an associated AP identifier that the first server pushes to the device, so as to trigger from the device an authentication to the AP of a second (data communication) network.

Thus, once authenticated to the second network, the device is about to attach, through the identified AP, to the second network.

It is to be noted that the identifier relating to the AP is predefined at the first server side, as associated with data to be received from the network detection entity. The identifier relating to the AP may be defined by a first server operator, like a Mobile Network Operator (or MNO), a Mobile Virtual Network Operator (or MVNO), a service provider or on its behalf or on its behalf, according to rules that this latter has previously chosen.

The first server is at the root of a transmission of the AP identifier and the identified device, as addressee of the AP identifier associated with data, is under control of the first server.

The first server updates the device with the identified AP to be connected and thus forces the device to authenticate to the second network, so as to offload the first network.

Such a network switching invention method is automatic and does not involve a device user. The invention method is therefore convenient for the device user.

The invention method is transparent to the device user.

Contrary to the herein above described known solution, the invention method allows accessing the second network while involving firstly a network detection entity and a first server, both as first network entities.

According to an additional aspect, the invention is a device for accessing a second data communication network.

According to the invention, the device comprises or is connected to means for attaching to a first data communication network. The device is adapted to receive at least one first message comprising an identifier relating to an access point. The access point is included within a second data communication network. And the device is adapted to send to the access point a request for launching an authentication procedure.

As device, it may be a user terminal or a secure element that is equipped with and/or accesses at least two Radio-Frequency (or RF) interfaces, one RF interface for attaching the first network and another RF interface for attaching the second network.

According to still an additional aspect, the invention is a system for accessing a second data communication network.

According to the invention, the system comprises at least one device, at least one network detection entity, at least a first remote server and at least one access point. The network detection entity is included within a first data communication network. The first remote server is included within the first data communication network. The access point is included within a second data communication network. The network detection entity is adapted to detect a device under a radio coverage of the first data communication network. And the network detection entity is adapted to send to the first remote server information and at least one identifier relating to a device. The first remote server is adapted to retrieve an identifier relating to an access point that is associated with the information. The first remote server is adapted to send to the device at least one first message comprising the identifier relating to an access point. And the device is adapted to send to the access point a request for launching an authentication procedure.

At the client side, the system may include, besides a user terminal, a secure element (or termed token) that is coupled or connected to the terminal.

### Brief description of the drawings:

Additional features and advantages of the invention will be more clearly understandable after reading a detailed description of one preferred embodiment of the invention, given as one indicative and non-limitative example, in conjunction with the following drawings:

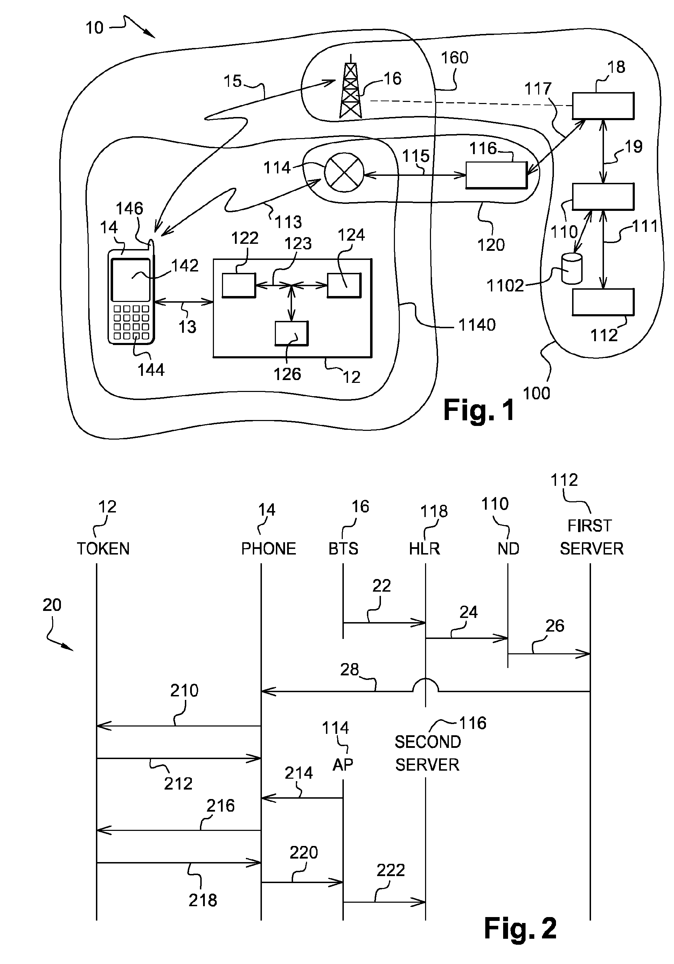

- Figure 1 illustrates a simplified diagram of one exemplary embodiment of a system comprising a mobile telephone, as device, a token, a network detection entity, a first remote server of a first data communication network, an AP and a second remote server of a second data communication network, the system being adapted to provision the token with an identifier relating to an AP and originates from the first remote server, according to the invention; and
- Figure 2 represents an example of a flow of messages exchanged between the device, the token, the network detection entity, the first and second remote servers, and the AP of the system of figure 1, in which the first remote server pushes dynamically, thanks to data originating from the network detection entity, to the token an AP identifier to force the device to trigger an authentication procedure to access, through the identified AP, the second data communication network.

### Detailed description:

Herein under is considered a Subscriber Identity Module (or SIM) type card, as token and device for accessing a second data communication network, that is connected to a mobile telephone, as host device.

Instead of being constituted by a smart card, the token may be constituted by, for example, an Embedded Secure Element (or ESE), as chip soldered, possibly in a removable manner, onto a Printed Circuit Board (or PCB) of a terminal equipment, or a dongle, for example, of the Universal Serial Bus (or USB) type. The token may have different form factors including at least one chip.

Naturally, the herein below described embodiment is only for exemplifying purposes and is not considered to reduce the scope of the present invention.

**Figure 1** shows schematically a system 10 for accessing a second data communication network.

The system 10 includes a SIM type card 12, a mobile telephone 14, a Base Transceiver Station type entity 16, a Home Location Register type entity 18, a network detection entity 110, an Over-The-Air server 112, an AP 114 and a Remote Authentication Dial In User Service type server (or RADIUS) 116.

For a sake of clarity and conciseness, the SIM type card 12, the mobile telephone 14, the Base Transceiver Station type entity 16, the Home Location Register type entity 18, the Network Detection entity 110, the Over-The-Air server 112 and the RADIUS type server 116 are termed hereinafter the token 12, the phone 14, the BTS 16, the HLR 18, the ND 110, the first server 112 and the second server 116 respectively.

Likewise, a first data communication network 100 and a second data communication network 120 are termed hereinafter the first network 100 and the second network 120 respectively.

The first network(s) 100 is(are) constituted by a mobile radio-communication network(s), like a Global Service for Mobiles (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a (Wideband) Code Division Multiple Access (or (W-)CDMA), a Long Term Evolution (or LTE) type network(s), a Third Generation Partnership Project (or 3GPP) and/or a fourth Generation (or 4G) radio-communication type technology(ies).

Such a mobile radio-communication network list is not exhaustive but only for exemplifying purposes.

The first network 100 includes at least one BTS 16, one HLR 18, one ND 110 and the first server 112.

The second network(s) 120 is(are) constituted by a SR radio-communication network(s), like a WLAN (acronym for "Wireless Local Area Network"), a Bluetooth, a Wifi, a Metropolitan Area Network (or MAN), a Worldwide Interoperability for Microwave Access (or WiMax) and/or a Wlreless BROadband (or WIBRO) radio-communication type technology(ies).

Such a SR radio-communication network list is not exhaustive but only for exemplifying purposes.

The second network 120 includes several APs including an AP 114 and the second server 116.

It is to be noted that only one mobile terminal equipment in cooperation with a token is represented for clarity reason. However, the first server 112 is able to provide dynamically a fleet of tokens and therefore terminals with an identifier(s) relating to one or several APs. The AP identifier(s) constitute(s) data allowing each addressed terminal to select the concerned identified AP amongst one or several APs that are locally present.

Likewise, only one AP 114 is represented. However, a plurality of APs (not represented) may cover the terminal equipment.

The AP 114 is not registered within the concerned token 12 prior to its provision by the first server 112. Once provisioned, the AP identifier allows accessing preferably one Wifi type network, as wireless network and SR radio network.

Instead of a phone, it may be, as user equipment, any other device including means for processing data, comprising or being connected to two wireless communication means for exchanging data with outside and comprising or being connected to means for storing data.

Within the present description, the adjective "wireless" used within the expression "wireless communication means" denotes that the means communicates via one or several Long Range (or LR) RF links and via one or several SR links.

The LR RF(s) and SR RF(s) are bi-directional and allow the phone 14 to exchange data in two ways with an external entity.

The LR RF(s) may be fixed at several hundreds of MHz, for instance, around 850, 900, 1800, 1900 and/or 2100 MHz.

The SR RF(s) may be fixed from around 2,4 GHz to around 10 GHz (for Ultra WideBand (or UWB), e.g. IEEE 802.15.4a), at 2,4-2,5 GHz with a range of about 10 m to 100 m (for Zigbee (e.g. IEEE 802.15.4), Wifi and Bluetooth or Bluetooth low energy (IEEE 802.15.1)) and/or other frequency value(s) allowing to communicate at a short range (typically from about 20 cm to 800 m).

The token 12 is under control of the host microprocessor.

Alternately, instead of being coupled to the token 12, the phone 14 stores, within its memory, data stored within the token 12 as described infra.

The token 12 is preferably associated with or tied to the first server 112.

The token 12 belongs to a user, as preferably subscriber to a wireless service(s).

The token 12 includes a chip (not represented).

The token chip includes at least one microprocessor 122, as data processing means, at least one memory 124, as data storing means, and at least one Input/Output (or I/O) interface 126 that are internally all connected, through an internal bidirectional data bus 123, to each other.

The token I/O interface(s) 126 allow(s) communicating data from the internal chip components to the chip exterior and conversely.

The token microprocessor(s) 122 processe(s), control(s) and communicate(s) internally data with all the other components incorporated within the chip and, through the I/O interface(s) 126, with the chip exterior.

The (or each) token microprocessor 122 executes or runs one or several applications.

The token microprocessor 122 is preferably able to initiate actions, in order to interact directly with the outside world, in an independent manner of the phone 14, as host device. Such a capacity of interaction at the initiative of the token 12 is also known as proactive capacity. The token 12 is thus able to send, at its own initiative, through the phone 14, to any device connected to the phone 14 a proactive command for sending, for instance, to the second server 116 a request for launching an authentication procedure.

The token memory 124 stores preferentially data, as wireless service subscription data, relating to one or several subscriptions to a first network(s) 100.

Instead of or besides data relating to one or several subscriptions to the wireless service(s), the token memory 124 may store data relating to one or several subscriptions to a mobile TeleVision (or TV) service, a mobile payment service, a wallet service and/or other data relating to one or several subscriptions to other service(s).

Data relating to one subscription to one or several wireless services via the first network 100 includes:
- a first International Mobile Subscriber Identity 1 (or IMSI1), as subscriber and service subscription identifier for accessing the first network 100; as first credentials;
- a first key Ki1, as network authentication key, allowing to authenticate the concerned subscriber to the first network 100; as first credentials;
- Milenage, as authentication algorithm, allowing to authenticate the concerned subscriber to the first network 100; and/or
- a file system including one or several Elementary Files (or EF), in which one EF registers one or several identifiers, each identifier relating to an AP.

Data relating to one subscription to one or several wireless services via the second network 100 includes:
- a second IMSI2, as subscriber and service subscription identifier for accessing the second network 120; as second credentials;
- a second key Ki2, as network authentication key, allowing to authenticate the concerned subscriber to the second network 120; as second credentials;
- Milenage, as authentication algorithm, allowing to authenticate the concerned subscriber to the second network 120; and/or
- a file system including one or several Elementary Files (or EF), in which one EF registers one or several identifiers, each identifier relating to an AP.

The token memory 124 may store, for example, two sets of service subscription data, one set of data relating to a first service subscription, as subscription 1, and another set of data relating to a second service subscription, as subscription 2.

The first service subscription data allows accessing from the phone 14 to the first network 100.

The first service subscription data comprises an identifier IMSI1, as first subscriber, relating to a first service subscription.

The first service subscription data includes preferably a first key Ki1, as first network authentication key Ki1, for authenticating the subscriber to the first network 100. The first network authentication key Ki1 is associated with the first subscriber IMSI1. The first network authentication key Ki1 allows authenticating the associated first subscriber to the first network 100.

The second service subscription data allows accessing from the phone 14 to the second network 120.

The second service subscription data comprises an identifier IMSI2, as second subscriber, relating to a second service subscription.

The second service subscription data includes preferably a second key Ki2, as second network authentication key Ki2, for authenticating the subscriber to the second network 120. The second network authentication key Ki2 is associated with the second subscriber IMSI2. The second network authentication key Ki2 allows authenticating the associated second subscriber to the second network 120.

The token memory 124 stores preferably data relating to a Uniform Resource Identifier (or URI), a Uniform Resource Locator (or URL) and/or an Internet Protocol (or IP) address of the first server 112, as identifier of the server to be addressed.

The token memory 124 stores preferably a Personal Identity Number (or PIN), as user authentication data, and/or one or several cryptographic algorithm(s), as data relating to secret(s) securely stored within the token 12.

The token memory 124 stores one or several SIM type applications.

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the phone 14 to authenticate to the first network(s) 100 by using the first service subscription data.

To authenticate to the first network(s) 100, the SIM type application(s) use(s) preferentially the first network authentication key Ki1 relating to a currently active first service subscription. The SIM type application(s) also use(s) preferably, on the one hand, data, as challenge and input, that is supplied by a server at the HLR 18 side. The server, as authentication server, attempts to authenticate the subscriber, and, on the other hand, an authentication algorithm, like, for instance, Milenage.

To authenticate to the second network(s) 120, the token 12 supports a default application, like a Extensible Authentication Protocol-SIM (or EAP-SIM), that allows to re-use the first credentials IMSI1/Ki1 that are stored within the token memory 124. As known per se, when the EAP-SIM is implemented, the first subscriber identity IMSI1 and the first credentials Ki1 of the token 12 that allow accessing the first network 100 are re-used for authenticating to the second network 120.

The token microprocessor 122 executes, in a preferred manner, one or several security functions.

The security functions include preferably a user authentication process to be used prior to accessing the token memory 124. To authenticate the user, the user has to provide a PIN, as user reference and authentication data that is securely stored within the token memory 124.

The security functions include preferentially an encryption/decryption process to be used before sending data to outside/after receiving data from outside, so as to protect access to data managed by or through the token 12. To encrypt data to be sent, the token 12 uses an encryption key and an encryption algorithm, such as an Advanced Encryption Standard (or AES), a Data Encryption Standard (or DES) or the like, that are stored within the token memory 124. To decrypt data to be received, the token 12 may use a decryption key and a decryption algorithm, such as an AES, a DES or the like, that are stored within the token memory 124.

According to the invention, the token memory 124 stores one agent, as application for accessing a second network.

Instead of being supported by the token 12, the application for accessing a second network is supported by the phone 14 and the token 12, so as to interact between them to attach to the second network 120.

A triggering of an execution of the agent occurs further to a reception by the agent of one or several messages comprising an identifier relating to an AP and possibly other parameter(s).

As to other parameter(s), there may be a pseudo of the subscriber, as identifier that is allocated to the token 12 to exchange with the AP 114 of the second network 120.

The message(s) originate(s) from an external entity(ies), namely, through the phone 14 and the BTS 16, from the first server 112.

Once the token 12 has received the message(s), the token 12 updates its memory 124 by storing the received identifier relating to an AP and other possible parameter(s).

The execution of the agent further allows sending to the phone 14 a request for launching an authentication procedure.

The token 12 implements, for instance, notably ETSI TS 102.310.

The token 12 is connected, through a bi-directional contact link 13, to the phone 14.

Instead of being constituted by a phone, the user terminal may be, for instance, a laptop computer, a Personal Computer (or PC), a tablet computer, a media-player, a game console, a netbook, a handset, a Personal Digital Assistance (or PDA), any other portable device or other device that accesses two RF interfaces, one RF interface for a first data communication network and another RF interface for a second data communication network.

Such a host device list is not exhaustive but only for exemplifying purposes.

According to another embodiment, the token 12 is coupled, through a bi-directional contact-less link, to the phone 14.

The phone I/O interface with the token 12 may be an International Organization for Standardization (or ISO) 7816 interface, as contact interface when the token 12 is inserted within the phone 12.

Instead of a contact interface, the phone I/O interface with the token 12 includes or be connected to a contact-less interface. The phone 14 includes or is connected to means for communicating data while using preferably a SR RF link.

The phone 14 is used for accessing one or several first networks 100.

The phone 14 includes preferably a display screen 142 and a keyboard 144, as Man Machine Interface (or MMI).

The MMI allows a phone user to interact with the phone 14.

The phone 14 comprises a first antenna 146. The first antenna 146 allows communicating data, through a LR RF link(s) 15, over one or several first networks 100, with the first server 112.

The phone 14 comprises a second antenna (not represented). The second antenna allows communicating data, via a SR RF link(s) 113, through an AP 114, with the second server 116 of the second network 120.

The phone 14 includes data processing means, such as one microprocessor (not represented), data storing means (not represented), as phone memory, and at least three I/O interfaces (not represented).

The phone 14 plays, in a preferential manner, a role of a modulator-demodulator (or modem), so as to exchange data, through the first network 100, notably between the token 12 and the first server 112.

Likewise, the phone 14 plays, in a preferential manner, a role of a modulator-demodulator (or modem), so as to exchange data, through the second network 120, notably between the token 12 and the second server 116.

The phone 14 carries out the following operations:
- a modulation of an analogical carrier signal to encode digital information to be transmitted, over the second antenna, through the AP 114, to the second server 116, and
- a demodulation of a received analogical carrier signal to decode the encoded digital information that is received, over the second antenna, through the AP 114, from the second server 116.

The phone memory stores an identifier relating to the phone 14, like an International Mobile Equipment Identity (or IMEI), and an identifier of a subscription of the phone 14 to the first network 100, like a Mobile Subscriber Integrated Services Digital network Number (or MSISDN). As known per se, the MSISDN is notably used for addressing a message to the phone 14 within the first network 100.

The phone 14 is under a radio coverage 160 of the first network 100.

The phone 14 is connected, through a LR RF link 15, to the BTS 16, as intermediary first network 100 entity notably between the phone 14 and the first server 112.

The BTS 16 is notably able to provide the token 12 and/or the phone 14 with information originating from the first server 112.

The BTS 16 is notably able to provide the first network 100, like the ND 110 and the first server 112, with information relating to the phone 14. As information, it may include, besides the MSISDN, as first network subscriber information, information for locating the phone 14, like an identifier relating to the corresponding cell 160, i.e. area of a radio coverage, information relating to a Quality of Service (or QoS) of one or several signals received by the BTS 16 from the phone 14 and/or other information originating from the phone 14 or the token 12, like a geographical location, such as coordinates of a Global Positioning System (or GPS) supported by the phone 14.

The cell may be typically from around 100 m² to around 10 km².

The BTS 16 is connected, through several first network entities (not represented), via cables 17 (represented with a dotted line), to the HLR 18.

The HLR 18 is connected, through other network entities (not represented), via cables, to the BTS 16.

The HLR 18 accesses a server that is dedicated to authenticate a subscriber to the first network 100 and also preferably a subscriber to the second network 120.

The HLR 18 accesses information relating to the first network 100 subscribers, as authorized users, that includes the subscribers IMSI and the corresponding network authentication keys KI among which there is IMSI1 and Ki1.

The HLR 18 is able notably to track the location of the phone 14

The HLR 18 includes a central database (not represented), termed Authentication Center (or Auc). The Auc stores securely, i.e. in an encrypted manner, the network authentication keys that allow authenticating the concerned subscriber to the first network 100. Among the network authentication keys, there is the key Ki1 relating to a subscriber IMSI1 who is authorized to access the first network 100.

The central database is used as a reference database for other network entity, such as a Visitor Location Register (or VLR).

The HLR 18 may be able to address the VLR, so as to let it register location information relating to the second network 120 and originating from the second server 116.

The HLR 18 receives from the phone 14, through another intermediary network entity, like the BTS 16, the IMSI1 and/or the MSISDN within a Signalling System 7 (or SS7) message, as signalling layer of the GSM type first network 100.

When provided with the IMSI1, the HLR 18 is able to retrieve a corresponding MSISDN, as data associated with the IMSI1, as identifier of the first network 100 subscriber.

The HLR 18 may add a retrieved MSISDN to any message originating, through the BTS 16, from the token 12 and/or the phone 14.

The HLR 18 is notably able to forward any message including a MSISDN relating to the phone 14 and possibly a corresponding IMSI1, as first network subscription identifier(s), originating from the token 12 and/or the phone 14 to the ND 110.

The HLR 18 is notably able to forward a message originating from the first 112 to the token 12 and/or the phone 14.

The HLR 18 is connected, through a cable 19, to the ND 110.

The ND 110 is able to detect any device, like the phone 14, under a radio coverage of the first network 100, like the cell 160.

The ND 110, as server, may be operated by a first network operator, as MNO or MVNO, a service provider or on its behalf.

The ND 110 is able to provide any message originating from notably the HLR 18 to the first server 112.

The ND 110 accesses a memory 1102 that stores a database.

The database is under control of an operator that manages access to the second network 120 and notably the AP to be connected while requesting authentication to the second server 116.

The database includes rules for accessing the second network 120 that satisfy the information, as required criterion(s).

The database includes information that is associated with at least one identifier relating to an AP, like the identifier of the AP 114.

The information is provided by the ND 110, as input, and originates possibly from the BTS 16.

As information, it may include one or several pieces of the following information:
- one or several predetermined dates and/or times;
- a user profile(s) that is(are) eligible for accessing the second network 120, such as a predetermined minimum age, a predefined gender and/or other kind of access condition(s), a user authentication;
- one or several predetermined minimum threshold values of Quality of Service (or QoS) and/or other radio parameter(s). The QoS may be characterized by a power of a signal(s) received from the phone 14 by the BTS 16;
- one or several predetermined logical channels. The logical channel(s) may comprise one voice communication channel and/or one or several data communication channels. As data communication channels, it may include an Internet Protocol (or IP) type channel, a GPRS type channel and/or any other channel the bit rate of which is higher than the one related to a voice communication channel;
- one or several identified geographic locations of the concerned subscriber; and/or
- one or several identified cells, like Cell-IDentifier (or Cell-ID), under a radio coverage of the first network(s) 110 and in which the concerned subscriber is situated.

The ND 110 takes into account the rules for accessing the second network 120, so as to forbid or authorize access to data stored at its side.

The ND 110 is arranged to retrieve an identifier relating to AP 114 that is associated with the information further to a query to the database.

According to another embodiment (not represented), instead of the ND 110 or additionally to the ND 110, the first server 112 accesses the memory 1102.

The ND 110 is arranged to provide the first server 112 with the identifier relating to the AP 114.

The ND 110 is connected, through a wire 111, to the first server 112.

According to another embodiment (not represented), instead of two separate entities, the ND and the first server constitute one and the same remote server.

The first server 112 is hosted by a computer.

The first server 112 is identified by a URI, like an URL, or an IP address, as server identifier. The first server identifier may be stored within the token memory 124, a phone memory or the ND memory 1102.

The first server 112 is preferably able to encrypt/decrypt data to be exchanged with the token 12 and/or the phone 14, as first server interlocutor, by using an encryption/decryption key(s) shared with the first server interlocutor.

The first server 112, as addressee of a request, originating from the ND 110, is arranged to provision OTA the token 12 and/or the phone 14 with data and notably an identifier relating to an AP 114.

As to the wireless AP 114 or termed hotspot 114, it may be any device including means for processing data (not represented), comprising or being connected to RF communicating means containing at least one antenna for sending to and/or receiving data from outside, comprising means (not represented) for storing data, and comprising means for communicating with a network, like Internet.

The phone 14 is under a radio coverage 1140 of the second network 120.

The AP 114 includes preferably at least one microprocessor (not represented), as data processing means, at least one memory (not represented) and at least two I/O interfaces.

The AP 114 is to be connected, through a bi-directional wireless link 113, to the phone 14.

The AP 114 is accessible through a predefined RF. The RF is preferably fixed so as to avoid RF interferences with other RF relating to other APs.

The AP 114 is connected, through a bi-directional wire link 115, to the second server 116.

The AP 114 has an identifier, like a Media Access Control (or MAC) address for Bluetooth or Service Set IDentification (or SSID) for Wifi.

The AP memory may store user data, like a User IDentifier and/or a user password, as second credentials, that allow identifying and authenticating a user of the AP 114.

The AP microprocessor processes data originating from the AP memory and, through the AP I/O interfaces, external entities, like the phone 14 and the second server 116.

The AP microprocessor executes preferably a security function(s), in order to protect access to user information managed through or by the AP.

The security functions may include an encryption/decryption process to be used before sending to/ after receiving from the phone 14 data, so as to protect access to data thus exchanged between the AP 114 and the phone 14 and/or between the AP 114 and the second server 116.

The AP 114 may be located within a home of an individual or premises of an enterprise or another public area.

The AP 114 may be portable and therefore movable.

The AP 114 may consist of a mere intermediary communication entity relaying information between the phone 14 and the second server 116.

The second server 116 is hosted by a computer.

The second server 116 is identified by a URI, like an URL, or an IP address, as server identifier. The first server identifier may be stored within the token memory 124 or a phone memory.

The second server 116 is preferably able to encrypt/decrypt data to be exchanged with the token 12 and/or the phone 14, as second server interlocutor, by using an encryption/decryption key(s) shared with the second server interlocutor.

The second server 116 is connected, through a wire 117, to the HLR 18.

The second server 116, as addressee of an authentication request originating from the AP 114, relays data relating to an authentication to the second network 120 between the AP 114 and the HLR 18, so as authenticate (or not) a subscriber to the second network 120.

According to another embodiment (not represented), the second server 116 is able to authenticate (or not) a subscriber to the second network 120.

**Figure 2** depicts an example of a message flow 20 that involves the token 12, the phone 14, the BTS 16, the HLR 18, the ND 110, the first server 112, the AP 114 and the second server 120.

It is assumed that the phone 14 is attached to the first network 100 and that the phone 14/token 12 is authenticated to the first network 100.

It is also assumed that the phone 14 user has not deactivated the link to any second network 120.

The phone 14 and the token 12 may use Application Protocol Data Unit, so as to exchange data.

The BTS 16 sends to the HLR 18 a message 22 including information and the first network subscription identity IMSI1, as subscriber identity. As information, it may be a cell identifier, "Cell-ID", as information for locating the phone 14 and/or information relating to a QoS of one or several signals received from phone 14 by the BTS 16.

The HLR 18 sends to ND 110 a message 24 including a MSISDN associated with the first network subscription identity IMSI1. The MSISDN allows a phone interlocutor to reach the phone 14.

The ND 110 detects that the phone 14 is under a radio coverage 160 of the first network 100.

The ND 110 sends to the first server 112 a message 26 including information and the MSISDN.

According to one embodiment, the ND 110 retrieves, based upon the location information, an identifier relating to the AP 114 that is available at the concerned location. The message 26 further (besides information and the MSISDN) includes an identifier relating to the AP 114 that is associated with the concerned location.

The first server 112 sends to the phone 14, as intermediary entity, a message 28 including an identifier relating to an AP 114 and intended to the token 12. This message 28 may be an Short Message Service type message. A content of the message 28 encompasses the MSISDN, as subscriber identifier within a header of the message.

The phone 14 sends to the token 12 a message 210 including the identifier relating to the AP 114.

The token 12 updates its memory while saving the received identifier relating to the AP 114.

The token 12 may request the phone 14 to fetch the received identifier relating to the AP 114. In such an embodiment, the phone 14 reads the updated token memory 124.

The token 12 sends to the phone 14 a message 212 including the identifier relating to the AP 114.

Once the phone 14 has fetched and stored the identifier relating to the AP 114, the phone 14 selects the identified AP 114 and forces to implement the default application, like EAP-SIM, that allows authenticating to the second network 120.

The phone 14 configures its SR I/O interface, so as to listen the RF relating to the identified AP 114.

The selected AP 114 broadcasts regularly a message 214 including a challenge to be used by its interlocutor for being authenticated, so as to access the second network 120.

Once the phone 14 is under a radio coverage 1140 of the second network 120, the phone 14 receives the broadcast challenge.

Then, the phone 14 forwards the broadcast challenge 216 to be used by its interlocutor for being authenticated.

The token 12 implements the supported default application for authenticating to the second network 120 and uses the challenge 216, so as to determine a corresponding result. For example, the token 12 uses the challenge, as input to a predetermined authentication algorithm, and the authentication key K1, as other input, so as to generate a corresponding result, as output.

Once determined, the token 12 sends to the phone 14, as intermediary entity, the result 218 to be used for being authenticated to the second network 120.

The phone 14 sends to the AP 114, as intermediary entity, the issued result 220.

Then, the AP 114 sends to the second server 116 the issued result 222.

The second server 116 sends the issued result (not represented) to the HLR 18, so as to submit the issued result to the authentication server. The authentication server verifies whether the result matches data for authenticating to the second network 120. If the result does not match data for authenticating to the second network 120, then the authentication server forbids the original interlocutor to access the second network 120 by sending, through the HLR 18, the second server 116 and the AP 144, to the original interlocutor a message including a failure message. Otherwise, i.e. if the result matches data for authenticating to the second network 120, then the authentication server authenticates the interlocutor by sending, through the HLR 18, the second server 116, to the original interlocutor a message including a success message.

Once the second server 116 knows that the phone 14 is authenticated to the second network, the second server 116 may send, through the ND 110 and possibly a gateway (not represented), to the first server 112 a message (not represented) including an IP address of the AP 114, as information for locating the phone 14.

Such a process for identifying the AP 114 to be accessed is transparent to the user since she/he has no credentials to give. This identification process is easy and convenient for the user.

An authentication to the second network 120 allows accessing dynamically the second network 120 with a seamless user experience.

Such an access to the second network 120 allows offloading the first network 100. Furthermore, an access to the second network 120 allows increasing a data rate. For instance, a 3G type network, as first network, has a data rate from about 7 Mbit/s to about 14 Mbit/s while a Wifi type network, as second network, has a data rate from about 54 Mbit/s to about 128 Mbit/s.

A lot of amendments of the embodiment described supra may be brought without departing from the scope of the invention. For example, as another embodiment, instead of the token 12, a user terminal, like the phone 14, as standalone entity, constitutes a device for accessing a second data communication network that carries out, besides the functions carried out by the phone 14 as described supra, the functions that are also carried out by the token 12 as described supra.

## Claims

1. A method (20) for accessing a second data communication network (120),
**characterized in that**, a first data communication network (100) including a network detection entity (110), the method comprises the following steps:
- the network detection entity detects a device (14) under a radio coverage of the first data communication network;
- the network detection entity sends to a first remote server (112) information (26) and at least one identifier relating to a device, the first remote server being included within the first data communication network;
- the network detection entity or the first remote server retrieves an identifier relating to an access point (114) that is associated with the information, the access point being included within a second data communication network;
- the first remote server sends to the device at least one first message (28) comprising the identifier relating to an access point; and
- the device sends to the access point a request (220) for launching an authentication procedure.

2. Method according to claim 1, wherein the information includes information for locating the device.

3. Method according to claim 1 or 2, wherein the information includes information relating to a quality of service of at least one signal received from the device by a base station type entity, the base station type entity being included within the first data communication network.

4. Method according to any of claims 1 to 3, wherein the first message further includes an allocated identifier relating to the device.

5. Method according to any of claims 1 to 4, wherein, prior to sending data from the network detection entity, the device further authenticates to the first data communication network.

6. Method according to any of claims 1 to 5, wherein, a second remote server being included within the second data communication network, the second remote server further sends, through the network detection entity, to the first remote server information for locating the device.

7. Method according to any of claims 1 to 6, wherein the at least one identifier relating to the device includes a Mobile Subscriber Integrated Services Digital network Number.

8. Method according to any of claims 1 to 7, wherein, a secure element (12) being coupled or connected to the device,
- the device sends to the secure element at least one second message (210) comprising the identifier relating to the access point; and
- the secure element sends to the device at least one third message (212) comprising the identifier relating to the access point.

9. A device (14) for accessing a second data communication network (120),
**characterized in that**, the device comprising or being connected to means for attaching to a first data communication network, the device is adapted :
- to receive at least one first message (28) comprising an identifier relating to an access point, the access point (114) being included within a second data communication network; and
- to send to the access point a request (220) for launching an authentication procedure.

10. A system (10) for accessing a second data communication network (120),
**characterized in that**, the system comprising at least one device (14), at least one network detection entity (110), at least a first remote server (112) and at least one access point (114), the network detection entity being included within a first data communication network (100), the first remote server being included within the first data communication network, the access point being included within a second data communication network,
**in that** the network detection entity is adapted:
- to detect a device under a radio coverage (160) of the first data communication network; and
- to send to the first remote server information (26) and at least one identifier relating to a device;
**in that** the first remote server (112) is adapted:
- to retrieve an identifier relating to an access point that is associated with the information;
- to send to the device at least one first message (28) comprising the identifier relating to an access point; and
**in that** the device is adapted to send to the access point a request (220) for launching an authentication procedure.
